# EUROPEAN PATENT APPLICATION

(11) **EP 3 982 649 A1**
(43) Date of publication of application: **13.04.2022**
(21) Application number: 20306186.6
(22) Date of filing: 09.10.2020
(51) Int. Cl.: H04W 4/021, H04L 29/08, H04W 12/06, H04W 12/63, H04W 12/71

(54) **DETERMINING A LOCATION OF A MOBILE COMPUTING DEVICE**

(71) Applicant: Hewlett-Packard Development Company, L.P., Spring TX 77389 (US)
(72) Inventor: Daney de Marcillac, Patrick Jacques Andre Marie, 38053 Grenoble Isere (FR); Schiffman, Joshua Serratelli, Bristol, Bristol BS1 6NP (GB); Secci, Sandro, 38053 Grenoble Isere (FR)
(74) Representative: Bryers LLP

(57) **Abstract**

A method and system are disclosed. The method comprises receiving, by a mobile computing device, from an output device communicatively coupled to the mobile computing device, location data defining an identity of the output device and/or a location of the output device; generating, by the mobile computing device, response data defining an identity of the mobile computing device and defining the identity of the output device and/or the location of the output device based on the output data; generating, by the mobile computing device, authentication data to authenticate the response data; and outputting, by the mobile computing device, the response data and the authentication data for communication to a remote computer located remotely of the mobile computing device.

## Description

### BACKGROUND

Mobile computing devices may be distributed to users by a device administrator for use by the users. For example, an employer may provide employees with mobile computing devices, such as laptop computers and/or smart-phones, for use by the employee. The administrator, e.g. the employer, may on occasion require virtual or physical access to the mobile computing devices, for example, to install software updates on the device, or to collect the devices for return to the administrator. For this purpose, the administrator could operate service terminals or lockers at which a user may deposit a mobile computing device to allow the administrator to access the device.

### BRIEF DESCRIPTION OF THE DRAWINGS

Figure 1 shows schematically an example of a service locker apparatus embodying an aspect of the present disclosure, comprising a service locker, an output device located inside the service locker, and an administrator system.
Figure 2 shows schematically an example of the service locker of the apparatus and a mobile computing device located inside the service locker and communicatively coupled to the output device.
Figure 3 shows schematically an example of a communicative coupling between the output device and the mobile computing device.
Figure 4 shows schematically a further example of a communicative coupling between the output device and the mobile computing device.
Figure 5 shows schematically an example of an apparatus for communicating the output device and the administrator system.
Figure 6 shows schematically hardware of the example apparatus for communicating the output device and the administrator system identified in Figure 5.
Figure 7 shows schematically example processes involved in determining a location of the mobile computing device, which includes processes of outputting location data, outputting response and authentication data, and determining a location of the mobile computing device.
Figure 8 shows schematically example processed involved in the process of outputting location data.
Figure 9 shows schematically processes involved in the process of outputting response and authentication data.
Figure 10 shows schematically processes involved in the process of determining a location of the mobile computing device.
Figure 11 shows schematically processes involved in a challenge-response authentication process for authenticating communications between the output device and the mobile computing device.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

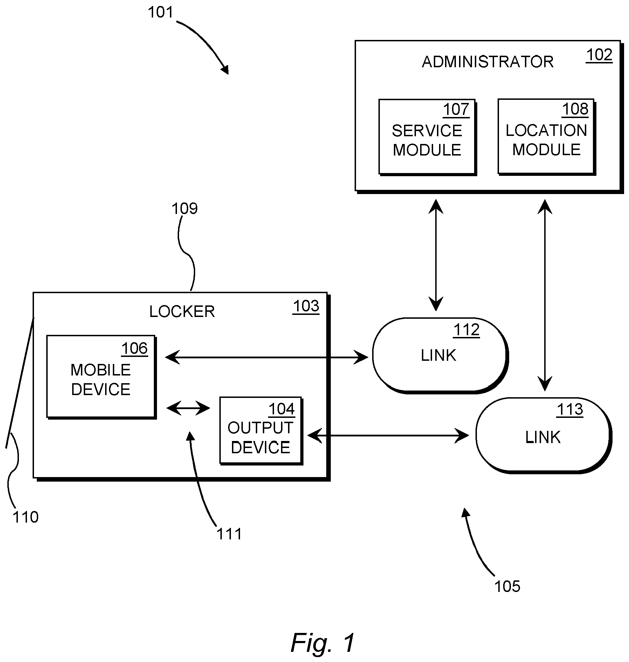

Referring firstly to Figure 1, a service locker infrastructure 101, embodying an example aspect of the present disclosure, comprises an administrator system 102, service locker 103, output device 104, and network infrastructure, indicated generally at 105. Service locker infrastructure 101 is deployed in the example for remotely servicing mobile computing devices, such as mobile computing device 106. In the example, service locker infrastructure 101 is depicted as comprising only a single service locker 103. In alternative examples, service locker infrastructure 101 may comprise a plurality of service lockers administered by administrator system 102. The plurality of service lockers may be located at mutually different locations.

In the example, service locker infrastructure 101 is deployed for remotely servicing users' mobile computing devices, such as a user's mobile computing device 106, which in examples is a laptop computer, a smart-phone or a smart-watch. The service locker infrastructure 101 may, for example, be operated for provision by the administrator system 102 of software fixes or updates to the mobile computing device 106. In another example, the service locker infrastructure 101 could be operated for the purpose of collecting users' mobile computing devices, such as mobile computing device 106, that are no longer required by users, for subsequent return of the mobile computing devices to an owner of the computing devices.

In these example deployments, it may be desirable for an operator of the administrator system 102 to be able to determine a location of the mobile computing devices, e.g. mobile computing device 106, for example, in order to be able to verify the presence of a particular mobile computing device in a particular one of the service lockers administered by the administrator system, e.g. to verify the presence of mobile computing device 106 in the service locker 103. Considering the first example deployment, where the service locker infrastructure is deployed for providing software fixes/updates to a user's device located inside the locker, an operator of the administrator system 102 may wish to ensure that mobile computing device 106 has been correctly deposited in service locker 103, in order to ensure that user device 106 receives a correct software fix or update. Considering the second example deployment, where the service locker infrastructure is deployed for collecting user devices which are no longer required by the user, it may be desirable for an operator of the administrator system 102 to be able to verify that a user has correctly deposited an authentic device, such as mobile computing device 106, in a service locker, such as service locker 103, to thereby guard against the risk of a user attempting to deceive the administrator by depositing an inauthentic user device, e.g. a dummy device.

However, the mobile computing device 106 may itself be unable to directly determine and report its location to the administrator. For example, the mobile computing device 106 may lack positioning functionality to be able to determine its own position. [WJ1] It is thus desirable to be able to determine a location of mobile computing device 106 by a method that does not require mobile computing device 106 to directly determine and report its own location.

Administrator system 102 comprises a service module 107 and a location module 108. Service module 107 is configured for servicing a user's mobile computing device, such as mobile computing device 106, deposited in service locker 103, for example, to provide software fix or update data to mobile computing device 106. Location module 108 is configured for determining an identity and a location of the mobile computing device 106, and for determining that the location of the mobile computing device matches a predetermined location of the service locker 103, to thereby enable a determination that the mobile computing device 106 is correctly located in the service locker 103.

The service module 107 and location module 108 of administrator system 102 may be implemented by shared computing hardware, e.g. a shared computer processer, or could be implemented by mutually different computing hardware.

Administrator system 102 may additionally comprise an input/output device, such as a network card, for interfacing with the network infrastructure 105.

Service locker 103 comprises an enclosure 109 for receiving a user's mobile computing device, such as mobile computing device 106, and comprises a door 110 for selectively closing an opening of the enclosure 109, such that the enclosure may thereby securely retain a deposited mobile computing device.

Output device 104 is located inside and mechanically attached to an interior of the enclosure 109 of the service locker 103. Output device 104 comprises a communication link 111 for communicating the output device with a mobile computing device, such as mobile computing device 106, located inside locker 103. As will be described, output device104 is communicable with a mobile computing device, such as mobile computing device 106, deposited in service locker 103, via communication link 111, to determine an identity and location of the mobile computing device.

Network infrastructure 105 comprises hardware for communicating the administrator system 102 with mobile computing device 106 and with output device 104. Network infrastructure 105 could, for example, comprise one or more of communication wires, optical fibres, wireless radio-frequency (RF) links, and/or portable data transfer devices for transferring data between the administrator system 102 and one or both of the mobile computing device 106 and the output device 104. In a simple example, network infrastructure 105 may comprise static hardware components for supporting a permanent communication channel between the administrator system 102 and one or both of the output device 104 and the mobile computing device 106.

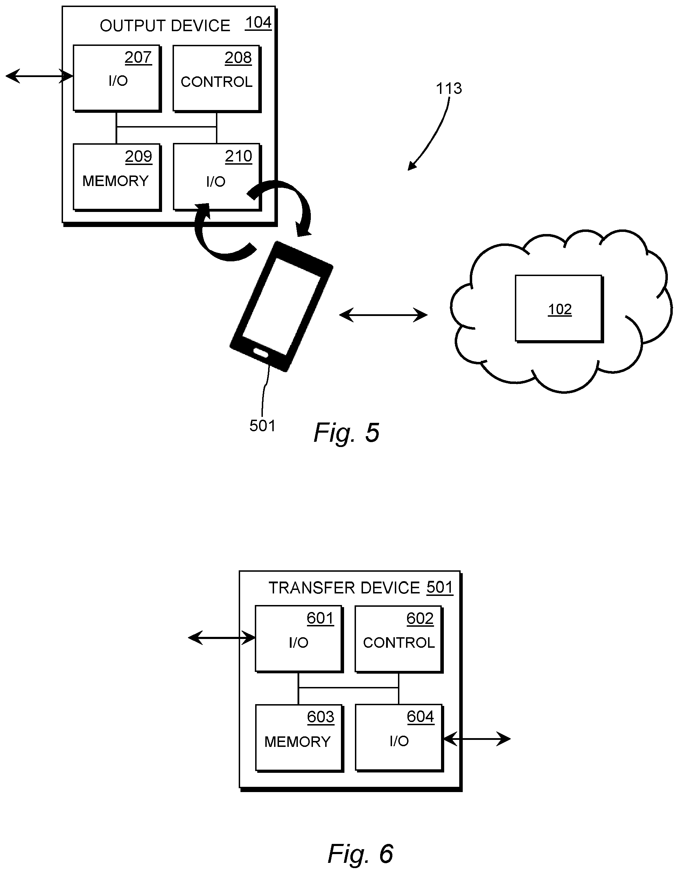

In the example, the network infrastructure 105 supports a first link 112 for communicating the administrator system 102 with the mobile computing device 106, and a second link 113 for communicating the administrator system 102 with the output device 104. In an example, which will be described in further detail with reference to Figures 5 and 6, second link 113 comprises a portable device for transferring data between the output device 104 and the administrator system 102.

Link 112 is a data network for communicating the service module 107 of the administrator system 102 with the mobile computing device 106, to allow servicing of the device 106 by the administrator system, for example, to allow uploading of fault report data from the device 106 to the service module 107, and/or downloading of software update or fix data from the service module 107 to the device 106. The link 112 may, for example, be terminated inside the service locker 103 by a cable, for manual connection by a user to an interface of device 106. The link 112 may advantageously be protected by a firewall, to thereby hide data inside the network from unauthorised devices, i.e. to hide data inside the network from devices other than the service module 107 and the device 106, to thereby preserve the confidentiality of data exchanged therebetween.

The link 113 is a further data network for communicating the location module 108 of the administrator system 102 with the beacon 104. The link 113 thus permits communication between the administrator system 102 and the output device 104 outside of the protected link 112. As will be described with reference to later Figures, in the example deployment the output device 104 is used for communicating location information with the mobile computing device 106, via the short-range communication link 111. The link 113 is in turn used for communicating the output device 104 with the location module 108 of the administrator system 102, to thereby permit communication of the location information to the administrator system.

Provision of a firewall to link 112 may advantageously improve the security of data transferred by the link 112. However, the firewall may disadvantageously complicate and/or prevent visibility of the data transferred over the link by an agent located outside of the firewall. An agent located outside of the firewall may thus be unable to determine an identity of a user's mobile computing device, such as mobile computing device 106, connected to the link 112. Thus, in the example, location module 108, link 113, and output device 104 are provided for determining an identity of a user's mobile computing device, such as mobile computing device 106, and a location of mobile computing device 106, located inside service locker 103, independently of the service module 107 and link 112.

As previously described, in the example, the locker infrastructure 101 is deployed for servicing users' mobile computing devices, and comprises service module 107 and link 112 for servicing a mobile computing device deposited in the locker 103. Location module 108, link 113, and output device 104 are meanwhile provided for determining an identity and location of a mobile computing device, such as device 106, deposited in the locker 103. In a simpler example, where the service locker infrastructure 101 is deployed for collecting users' mobile computing devices for return to an owner, rather than for servicing users' mobile computing devices, service module 107, and link 112 may be omitted, and communication between the administrator system 102 and a mobile computing device, such as device 106, inside locker 103 may be achieved solely by link 113 and output device 104.

In the example, link 112 and link 113 are depicted as mutually separate communication channels. In an alternative example, link 112 and link 113 could be supported by a common network.

In the example therefore, the service locker infrastructure 101 is operable for determining an identity and location of a mobile computing device, such as device 106, deposited in service locker 103. As will be described in further detail with reference to later Figures, where the location of service locker 103 is known by the administrator system 102, determining an identity and a location of the a user's mobile computing device, such as device 106, advantageously enables verification by the administrator system 102 that a particular device, such as device 106, is correctly located inside a particular service locker, such as locker 103. The administrator system 102 may thereby be able to detect if a user has deposited a mobile computing device, such as device 106, in a correct locker, such as locker 103, and/or if a user has deposited an authentic mobile computing device in an incorrect locker, e.g. a locker other than locker 103, and/or if a user has deposited an inauthentic mobile computing device in a locker such as locker 103.

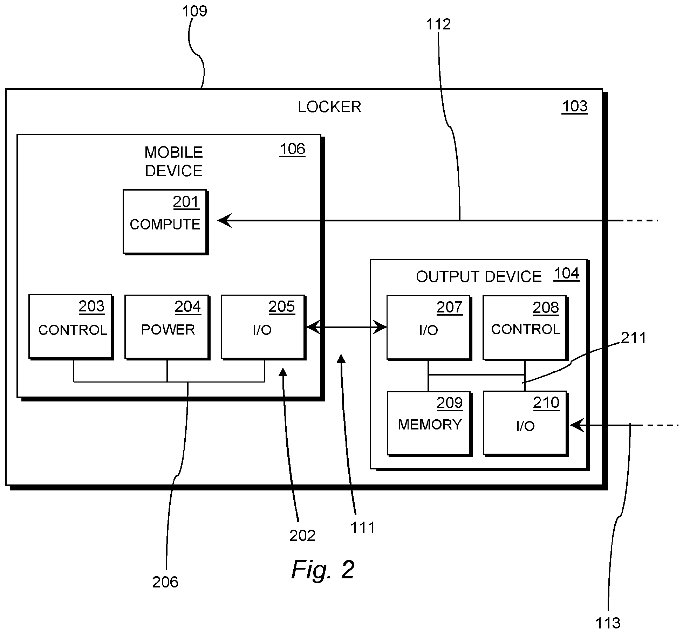

Referring next to Figure 2, mobile computing device 106 communicates with the service module 107 of the administrator system 102 via link 112, and with the location module 108 of administrator system 102 via output device 104 and link 113.

In the example, mobile computing device 106 comprises first computing resources 201 for communicating with service module 107 of administrator system 102 via link 112, to enable servicing of device 106 by administrator system 102. The first computing resources 201 could, for example, comprise computer processor and computer memory resources for running an operating system and application software on the user device. The first computing resources 201 may additionally comprise an input/output device, such as a network card, for interfacing with the link 112, to thereby facilitate communication with the service module 107 of administrator system 102, for example, to enable uploading and/or downloading of software fix or update data. In another example, device 106 may omit first computing resources 201, and locker infrastructure 101 may omit service module 107 and link 112.

In the example, mobile computing device 106 further comprises second computing resources, indicated generally at 202, for communicating identity and location data with output device 104 via short-range communication link 111, to thereby allow determination of an identity and location of mobile computing device 106 by location module 108 of administrator system 102. Second computing resources 202 comprises controller 203, power supply 204, input/output module 205, and system bus 206. Controller 203 is provided for controlling exchange of location and identity information with beacon 104 via short-range communication link 111. Controller 203 may comprise computer memory, for example, flash memory and/or DRAM, for storing data. As will be described, in an example, controller 203 supports the functionality of a response module for generating response data and an authentication module for generating authentication data. Electrical power supply 204 is provided for powering the various components of the computing resources 202. Power supply 204 may, for example, comprise a battery. Input/output interface 205 is providing for interfacing the second computing resources 202 with the short-range communication link 111, to thereby permit communication with output device 104. Components 203 to 205 of second computing resources 202 communicate via system bus 206.

Output device 104 comprises short-range communication link 111, first input/output device 207, controller 208, memory 209, second input/output device 210, and system bus 211.

Short-range communication link 111 is provided for communicating the output device 104 with a mobile computing device located inside service locker 103, such as mobile computing device 106, to thereby enable communication of location data therebetween. Input/output device 207 is provided for interfacing the output device 104 with the short-range communication link 111, to thereby permit communication with mobile computing device 106. Input/output device 207 thus supports the functionality of a communication module for communicating with the mobile computing device 106. Controller 208 is provided for controlling the operation of output device 104, in particular, for controlling the exchange of data with the mobile computing device 106, and controlling communication of the output device 104 with the location module 108 of the administrator system 102. As will be described, controller 208 supports the functionality of a location module for generating location data. Memory 209 is read/write memory accessible by the controller 208 for storage of location data and other data, such as program data for controlling the operation of the output device in accordance with a program. In examples, memory 209 is flash memory and/or DRAM memory. In an example, memory 209 is configured to store location data identifying the output device 104 in accordance with an identification protocol operated by the administrator system 102. Input/output device 210 is provided for interfacing the output device 104 with the link 113, to thereby permit communication between the output device 104 and the location module 108 of the administrator system 102 via the link 113. In an example, input/output device 210 may comprise a network card for interfacing the output device 104 with the link 113. Components 207 to 210 of output device 104 communicate via system bus 113.

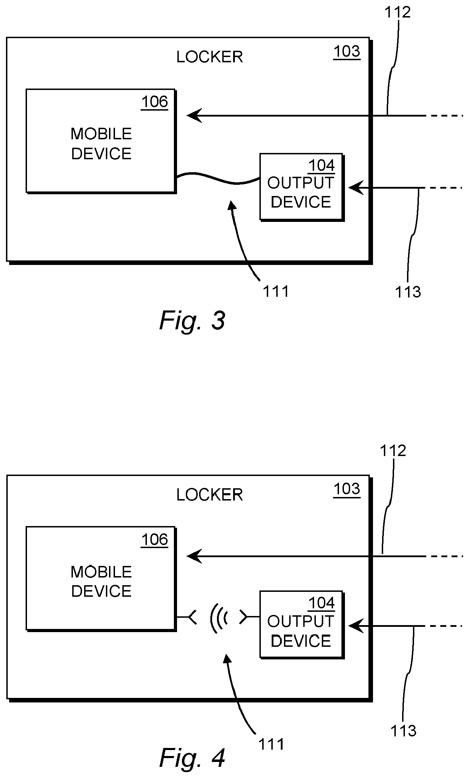

As will be described with reference to later Figures, in a deployment, a location of mobile computing device 106 is determined through detection of a proximity of the mobile computing device 106 to the output device 104, and by subsequent determination of the location of output device 104. The location of mobile computing device 106 may thereby be determined by the administrator system 102, notwithstanding that mobile computing device 106 may itself lack the functionality to determine and/or report its own position. A proximity of mobile computing device 106 to output device 104 is detected by communication between the mobile computing device 106 and the output device 104 via the short-range communication link 111. Successful communication between the mobile computing device 106 and the output device 104 via the short-range communication link 111 may be interpreted to infer that the mobile computing device 106 is within a distance of the output device 104 that is no greater than an effective range of the short-range communication link 111. Where a location of the output device 104, and an effective range of the short-range communication link 111, are known, an approximate location of the mobile computing device 106 may thereby be determined. In order that a location of the mobile computing device 106 can be determined relatively precisely, it is generally desirable that the effective range of short-range communication link 111 is relatively short, for example, in the order of a several metres or less, or alternatively approximately one metre or less. As will be described with reference to Figures 3 and 4, in examples the short-range communication link 111 may comprise one or more of a communication cable or a short-range wireless communication network.

Referring next to Figure 3, in as example, the short-range communication link 111 comprises a communication cable for communicating the output device 104 with the mobile computing device 106. The communication cable is connected at one end to the input/output interface 207 of the output device 104, and terminates at a free end in a connector for connection by a user to the input/output interface 205 of mobile computing device 106. The communication cable has a finite, relatively short, length. In an example, the communication cable has a length of less than one metre. In order to connect to the output device 104 using the communication cable, the mobile computing device 106 thus must be located within a distance of the output device 104 that is no greater than the length of the communication cable, e.g. within one metre of the output device 104. In this example therefore, by communication between mobile computing device 106 and output device 104, via the short-range communication link 111, the location of mobile computing device 106 may be inferred to be within the range of the communication cable, e.g. within one metre, of the location of the output device 104. Where the location of the output device 104 is known to the administrator system 102, the location of the mobile computing device 106 may thereby be determined.

In an example, locker 103 may be configured such that enclosure door 110 may not be closed on the communication cable of short-range communication link 111. In this example therefore, where a mobile computing device, such as device 106, is detected to be connected to the communication cable, and where the door 110 of locker 103 is detected to be in the closed position, it may be determined with an enhanced degree of certainty that the mobile computing device, e.g. device 106, is located inside locker 103.

Referring next to Figure 4, in another example, the short-range communication link 111 comprises a short-range wireless communication link. In this example, each of input/output module 205 of mobile computing device 106 and input/output device 207 of output device 104 may comprise a transceiver and antenna pair, operable to communicate with one another via a short-range wireless communication method, under the control of their respective controllers, 203, 208. In an example, the output device 104 and mobile computing device 106 are configured to communicate by wireless communication in accordance with the IEEE 802.15.1 'Bluetooth' communication protocol. As an example, alternative, the output device 104 and mobile computing device 106 could be configured to communicate by a wireless communication accordingly to an alternative protocol. In another example, the output device 104 and mobile computing device 106 could be configured to communicate by a near-field communication protocol, in which example input/output module 205 and input/output device 207 may each comprise loop antennas for inductive coupling. In this regard, it is generally desirable that the effective range of short-range communication link 111 is as short as practicably allows coupling with a mobile computing device, such as device 106, located inside locker 103. A shortest range of short-range communication link 111 advantageously allows the location of a mobile computing device, such as device 106, to be determined with a greatest precision.

In the example depicted by Figure 4, communication by the output device 104 with the mobile computing device 106 infers that the device 106 is within a distance of the output device 104 that is not greater than a range of the short-range wireless communication link 111. Where a maximum range of the short-range wireless communication link 111 is known, a location of the user device 106 may thereby be determined.

In an example, the short-range communication link 111 may be configured as a wireless communication link having a range that is restricted to an inside of the enclosure 109 of the locker 103, such that the wireless communication link does not penetrate outside of the enclosure 109 of locker 103. In this example therefore, where a mobile computing device, such as device 106, is detected to be in communication with the output device 104 via the short-range wireless communication link 111, it may be determined with an enhanced degree of certainty that the mobile computing device is located inside locker 103.

Referring next to Figures 5 and 6 collectively, in an example, link 113 comprises a portable data transfer device 501 for communicating the output device 104 with the location module 108 of the administrator system 102.

The portable data transfer device 501 is a handheld computing device operable to communicate with each of output device 104 and the location module 108 of administrator system 102. Portable data transfer device 501 is thus operable to permit communication of location data between the output device 104 and the administrator system 102. Portable data transfer device 501 has particular utility where static hardware supporting link 113 is impracticable, for example, where locker 106 is deployed in a location unable to support such static hardware, such as in a very remote location. Using the portable data transfer device 501, an operator's agent may retrieve location data from output device 104 using the portable data transfer device 501, for onward transmission by the data transfer device 501 to location module 108 of administrator system 102.

Referring in particular to Figure 6, in an example, portable data transfer device 501 comprises input/output device 601, controller 602, memory 603, input/output device 604, and system bus 605.

Input/output device 602 is configured for communicating with input/output device 210 of output device 104. In an example, each of input/output device 210 of output device 104, and input/output device 601 of portable data transfer device 501, may comprise a loop antenna for communicating via a near-field wireless communication protocol. Communication between the output device 104 and portable data transfer device 501 may thus be achieved by locating the portable device 501 within a communication range of the output device 104. In another example, portable data transfer device 501 may be adapted to communicate with output device 104 via a communication cable, in which example each of input/output device 210 of output device 104 and input/output device 601 of portable data transfer device 501 may comprise a connection port for connection of the communication cable.

Controller 602 is configured to control communication between the portable data transfer device 501 and each of output device 104 and location module 108 of administrator system 102.

Memory 603 is read/write memory accessible by the controller 602 for storage of data. In examples, memory 603 is flash memory and/or DRAM.

Input/output device 604 is configured for interfacing the portable data transfer device 501 with location module 108 of administrator system 102. In an example, portable data transfer device 501 is adapted to communicate with location module 108 of administrator system 102 wirelessly, for example, by communication in accordance with the Long-Term evolution LTE standard. In this example, input/output interface 604 may comprise a transceiver and antenna for coupling to a corresponding transceiver/antenna of the location module 108 of the administrator system. In another example, portable data transfer device 501 may be configured to communicate with location module 108 of administrator system 102 via a communication cable, in which example input/output device 604 may comprise a connection port for connection of a communication cable.

Components 601 to 604 of the portable data transfer device 501 communicate via system bus 605.

As previously described, in an alternative, relatively simpler, example, the link 113 could instead comprise static hardware, for example, fixed communication wires, forming a static communication link between location module 108 of the administrator system 102 and output device 104. In this alternative example, portable data transfer device 501 may be omitted from the infrastructure.

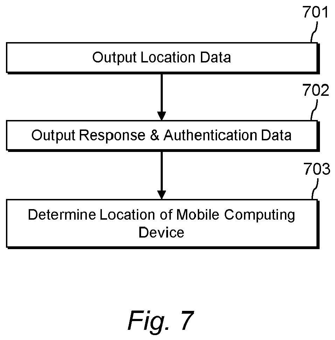

Referring next to Figure 7, in an example, a method for determining a presence of a mobile computing device, such as mobile computing device 106, in service locker 103 of locker infrastructure 101 comprises three stage.

At stage 701, the output device 104 outputs location data, defining an identity of the output device 104 and/or a location of the output device 104, via the short-range communication link 111 to the mobile computing device 106.

At stage 702, the mobile computing device 106 receives the location data output at stage 701, via the short-range communication link 111, and outputs response data defining an identity of the mobile computing device 106 and defining the identity of the output device 104 and/or the location of the output device 104, based on the location data received at stage 701. At stage 702, the mobile computing device 106 further outputs authentication data to authenticate the response data. At stage 702, the response and authentication data is communicated to the administrator system 102 for evaluation by the administrator system.

At stage 703, the administrator system 102 receives the response data and the authentication data output by the mobile computing device 106 at stage 702, authenticates the response data, and determines a location of the mobile computing device based on the response data.

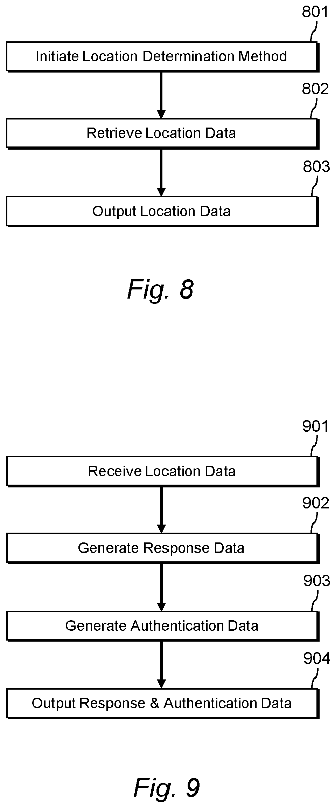

Referring next to Figure 8, in an example, stage 701 for outputting, by the output device 104, location data comprises three stages.

At stage 801, the method for determining a location of a mobile computing device, such as device 106, is initiated. The process could be initiated by the administrator system 102 and/or the output device 104 in response to detection of a condition indicating that a user's mobile computing device, such as device 106, may have been deposited in a locker, such as locker 103. For example, the administrator system 102 could be configured to detect closing of door 110 of locker 103, which may be considered indicative of a user having deposited a mobile computing device, such as device 106, in locker 103, and to initiate the location determination method in response to detection of closing of the door. In an alternative, simpler, example, the method could be initiated manually by a user inputting an initiate command, for example, via output device 104, upon the user depositing a mobile computing device in locker 103.

At stage 802, in response to receiving an initiate notification generated at stage 801, for example, in response to a detection that a mobile computing device may have been deposited in service locker 103, the controller 208 of output device 104 retrieves location data from the memory 209. The location data could comprise data defining a location of the output device 104. The data defining a location of the output device could, for example, be pre-defined in the memory 209 of the output device, by an operator's agent during installation of the output device 104 in the service locker 103. As an example alternative, the location data could comprise data defining an identity of the output device 104 in accordance with a pre-determined identification protocol known to administrator system 102. Similarly, the data defining the identity of the output device, in accordance with the protocol, could be pre-stored in the memory 209 by an operator's agent prior to deployment of the output device.

In a particular example to be described in detail herein, stage 802 involves the controller 208 of the output device 104 retrieving, from the memory 209, data defining an identity of the output device 104, i.e. a unique identifier, in accordance with a pre-determined identification protocol known to administrator system 102. As will be described, the unique identifier stored in the memory 209 of the output device may correspond to an identifier associated by the location module 108 of the administrator system 102 with location coordinates.

In another example, at stage 802, the controller 208 of output device 104 could retrieve location data defining a location of the output device 104. For example, output device 104 may comprise, stored in the memory 209, predetermined location data identifying a location of the output device 104. Alternatively, where the output device 104 is configured to be movable, for example, where service locker 103 is portable, the output device 104 could utilise a positioning system, for example, a satellite-based positioning system, for determining a current location of the output device 104L[WJ2]

At stage 803, the controller 208 of output device 104 causes the location data obtained at stage 802 to be output by input/output device 207 via the short-range communication link 111, for communication to the mobile computing device 106.

The output device 104 may, optionally, be further configured to generate and output authentication data to permit authentication of the output device by the mobile computing device 106 and/or by the administrator device 102. The authentication data could, for example, comprise a digital signature generated based on a private key stored in memory 209 of output device 104 accessible by the controller 208, and which is transmitted with a corresponding public key. As an example alternative, the authentication data could comprise a message authentication code, generated by the controller 208 using a key generation algorithm and a signing algorithm pre-stored in memory 209, corresponding to a verifying algorithm known to the mobile computing device 106 and/or to the administrator system 102. In an example, the authentication data generated at stage 903 could comprise a hash-based message authentication code (HMAC), for which the administrator system 102 has knowledge of the public key.

As will be described, the purpose of the authentication data optionally generated at stage 803 is to enable verification by the mobile computing device 106 and/or the administrator system 102 that the response data, when communicated to the administrator system, is authentic response data generated by an authentic output device, e.g. by device 104. This authentication process thus ensures that a user is not attempting to deceive the administrator by generating location data using an inauthentic output device.

In an example therefore, stage 803 could further involve the output device 104 generating authentication data, e.g. by retrieving a digital signature or message authentication code, from memory 209, and outputting the authentication data to the mobile computing device 106 associated with the location data.

Referring next to Figure 9, in an example, stage 702 for outputting by the mobile computing device 106 of response data and authentication data comprises four stages.

At stage 901, the mobile computing device 106 receives the location data, and optionally also the authentication data, output by the output device 104 at stage 803 via the short-range communication link 111.

In an example, stage 901 could further involve the mobile computing device inspecting the authentication data output by the output device 104 at stage 803 to determine whether the output device, and so the received location data, is authentic. In an example, the mobile computing device could modify its operations on the basis of the determination of whether or not the output device is authentic. For example, if the output device is determined to be inauthentic, the mobile computing device could take no action, but if determined to be authentic the mobile computing device could proceed to perform later processes. In an alternative example, the mobile computing device 106 could simply pass the authentication data received from the output device on to the administrator device 102, and the administrator device 102 could perform authentication procedures to authenticate the output device.

At stage 902, in response to receiving the location data at stage 901, the controller 203 of the mobile computing device 106 generates response data defining an identity of the mobile computing device 106, in accordance with a pre-determined identification protocol known to administrator system 102. For example, mobile computing device 106 may comprise, stored in memory accessible by the controller 203, a unique identifier, identifying the mobile computing device 106 in accordance with the agreed identification protocol. Stage 902 may further comprise the controller 203 of the mobile computing device 106 evaluating the location data received at stage 901 to extract the data defining the identity of the output device 104 and/or the data defining the location of the output device 104. The response data generated at stage 902 thus comprises the identity data defining the identity of the mobile computing device 106, and at least one of data defining the identity of the output device 104 or data defining the location of the output device 104.

At stage 903, in response to receiving the location data at stage 901, the controller 203 of the mobile computing device 106 further generates additional authentication data for authenticating the response data generated at stage 902. As will be described, the purpose of the additional authentication data generated at stage 903 is to enable verification by the administrator system 102 that the response data, when communicated to the administrator system, is authentic response data generated by an authentic mobile computing device, e.g. by device 106. This authentication process thus ensures that a user is not attempting to deceive the administrator by depositing an inauthentic device in service locker 103.

The authentication data generated by the controller 203 at stage 903 could, for example, comprise a digital signature generated based on a private key stored in memory of mobile computing device 106 accessible by the controller 203, and which is transmitted with a corresponding public key. As an example alternative, the authentication data could comprise a message authentication code, generated by the controller 203 using a key generation algorithm and a signing algorithm pre-stored in memory of mobile computing device 106, corresponding to a verifying algorithm known to the administrator system 102. In an example, the authentication data generated at stage 903 could comprise a hash-based message authentication code (HMAC), for which the administrator system 102 has knowledge of the public key.

At stage 904, the controller 203 of the mobile computing device 106 causes the mobile computing device 106 to output the response data generated at stage 902 in association with the authentication data generated at stage 903, and optionally also in association with the authentication data generated at stage 803, for communication to the administrator system 102. For example, the output of the mobile computing device could comprise a message having a payload comprising the response data, the payload being signed by the authentication data.

In an example, stage 904 involves the mobile computing device 106 outputting the response data and the authentication data to the output device 104, via the short-range communication link 111. Stage 904 may further involve the controller 208 of the output device 104 storing the response and authentication data in the memory 209. As will be described, the output device 104 may subsequently relay the response and authentication data to the administrator system 102.

In an alternative example, the mobile computing device 106 may output the response data generated at stage 902 and the authentication data generated at stages 803, 903 to the administrator system 102 directly, for example, using a further wired or wireless communication link between the mobile computing device 106 and the administrator system 102.

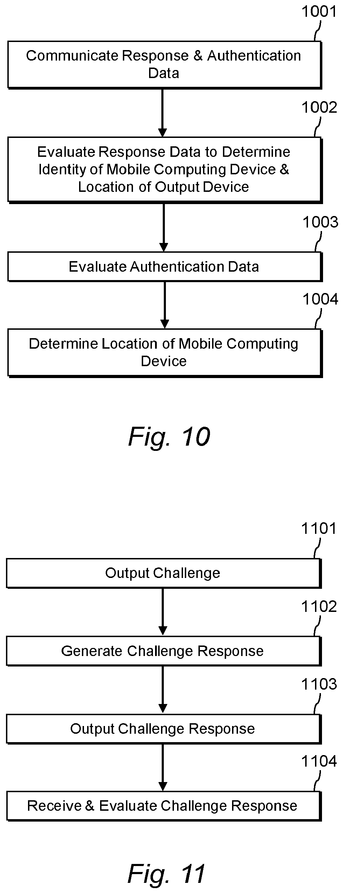

Referring next to Figure 10, in an example, stage 703 for determining a location of the mobile computing device 106, by the administrator system 102, comprises four stages.

At stage 1001, the response and authentication data output by the mobile computing device 106 at stage 904 is communicated to the administrator system 102.

As previously described, in a simple example, stage 1001 could involve communicating the response and authentication data directly from the mobile computing device 106 to the administrator system 102 via a direct wired or wireless communication link.

However, in an alternative example, where a direct communication link between the mobile computing device 106 and the administrator system 102 doesn't exist, as previously described, the mobile computing device 106 could output the response and authentication data to the output device 104, and the output device 104 may in turn onwardly communicate the response and authentication data to the administrator system 102 via the communication link 113.

In this example, in which the output device 104 receives the response data from the mobile computing device for communication to the administrator device, instead of the output device 104 generating authentication data at stage 803, the output device could instead generate authentication data at stage 1001 for authenticating the output device. The output device could then communicate that authentication data to the administrator system in association with the response data and authentication data output by the mobile computing device at stage 904. The administrator system could then perform an authentication procedure to authenticate the output device.

Referring to the example arrangement depicted in Figure 5, in an example, the communication link 113, for communicating the output device 104 with the location module 108 of the administrator system 102 comprises portable data transfer device 501 for transferring the response and authentication data.

Thus, in an example, stage 1001 may involve an agent of the operator interrogating the output device 104 using the portable data transfer device 501, to prompt the controller 208 of the output device 104 to output the response and authentication data by the input/output device 210 to the portable data transfer device, for example, via a wireless communication link. For example, this stage may involve the controller 208 of the output device 104 retrieving the response and authentication data from the memory 209. In an example, where the mode of communication between portable data transfer device 501 and output device 104 is near-field communication, stage 1001 may involve an agent positioning the portable data transfer device 501 within the communication range of the output device 104 and initiating an upload procedure of data from the output device 104 to the portable data transfer device 501. Stage 1001 may also involve the controller 602 of the portable data transfer device 501 storing the uploaded data on the memory 603.

In the example, stage 1001 may further involve, the controller 602 of the portable data transfer device 501 outputting the response data and the authentication data to the location module 108 of the administrator system 102, for example, by a wireless communication method. For example, the portable data transfer device could be caused to output the response and authentication data to the administrator system in response to a manual input of an agent operating portable data transfer device 501.

At stage 1002, the location module 108 of administrator system 102 receives the response data and the authentication data output by the mobile computing device, for example, via the output device 104 and the portable data transfer device 501.

In an example, the location module 108 may store the received response data in computer memory of the administrator system 102. The location module 108 may evaluate the response data to extract the data defining an identity of the mobile computing device, to thereby allow a determination that communication has been established with a correct user device administered by the administrator system 102.

The location module 108 may then extract the location data defining the identity or location of the output device 104. In the former case, the location module 108 may subsequently compare the identity of the output device 104 to an index stored in memory of the administrator system 102, in which an identity of the output device 104 is associated with a location of the output device 104, to thereby determine the location of the output device. In the latter case, the location module 108 may simply read the data defining the location of the output device.

At stage 1003, the location module 108 may then subsequently evaluate the authentication data to authenticate the response data. For example, where the authentication data comprises a digital signature, the location module 108 may retrieve from memory a pre-defined public key corresponding to the identified mobile computing device, and using a signature verifying algorithm may thereby verify the authenticity of the response data, i.e. verify that the response data originates from the identified mobile computing device. In short therefore, the authentication process allows the administrator system 102 to verify that the response data does indeed originate from the authentic computing device with the reported identity, thereby avoiding the risk of a user depositing an incorrect or inauthentic device. Stage 1003 could, optionally, further involve the administrator system evaluating authentication data generated by the output device, as previously described, in order to authenticate the output device.

At stage 1004, the location module 108 of the administrator system may subsequently determine the location of the mobile computing device 106 by reference to the location of the output device 104 determined at stage 1002 and a known effective communication range of the short-range communication link 111. Stage 1004 may involve the administrator system subsequently displaying information relating to the location of the mobile computing device 106 to an operator of the administrator system 102. Stage 1004 may further involve the location module 108 of administrator system 102 comparing the determined location of the mobile computing device 106 to a known location of the service locker 103. A match between the determined location of the mobile computing device 106 and the known location of the service locker 103 indicates the presence of computing device 106 in service locker 103. By this operation, the location module 108 may thereby determine whether or not a correct user device, e.g. user device 106, is located in a correct one of the service lockers administered by the administrator system 102, e.g. in service locker 103.

Referring finally to Figure 11, in examples, the method for determining a location of the mobile computing device 106 may additionally involve a challenge-response verification process, for verifying the liveness of communications between the mobile computing device 106 and the output device 104, to thereby reduce the risk of replay attacks being perpetrated. In an example, the challenge-response verification process comprises four stages.

At stage 1101, the output device 104 outputs to the mobile computing device 106, via the short-range communication link 111, a pseudo-random challenge, in accordance with a challenge-response protocol agreed with mobile computing device 106. The outputting of the challenge by the output device 104 could, for example, be combined with the outputting by the output device 104 of the location data at stage 701.

At stage 1102, the controller 203 of the mobile computing device 106 evaluates the received challenge, and generates a response to the challenge, in accordance with a pre-defined challenge response protocol. The generation of a response to the challenge could, for example, be combined with the generation of response data at stage 902.

At stage 1103, the controller 203 of the mobile computing device 106 causes the mobile computing device 106 to output the challenge response generated at stage 1102, for example, via the short-range communication link 111 to the output device 104, for onward transmission to the administrator system 102. Outputting of the challenge response could, for example, be combined with outputting of the response and authentication data at stage 904.

At stage 1104, the administrator system 102 receives and evaluates the challenge response, to determine whether the challenge response is valid in accordance with the challenge-response protocol. The administrator system could, for example, receive the challenge response from the output device 104 via the communication link 113, optionally in combination with the response and authentication data at stage 1001. In the event that the challenge response is determined to be valid in accordance with the challenge response protocol, the administrator system 102 may thus infer that communications with the mobile computing device 102 are live, and not the result of replay attacks.

The teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the present disclosure. In particular, a feature or block from one example may be combined with or substituted by a feature/block of another example.

In particular, whilst aspects of the disclosure have been described in detail herein in the context of the example service locker deployment, it will be appreciated that aspect of the disclosure have far wider utility, for use more generally in securely determining a location of a mobile computing device.

The word "comprising" does not exclude the presence of elements other than those listed in a claim, "a" or "an" does not exclude a plurality, and a single processor or other unit may fulfil the functions of several units recited in the claims.

The features of any dependent claim may be combined with the features of any of the independent claims or other dependent claims.

## Claims

1. A method comprising:
receiving, by a mobile computing device, from an output device communicatively coupled to the mobile computing device, location data defining an identity of the output device and/or a location of the output device;
generating, by the mobile computing device, response data defining an identity of the mobile computing device and defining the identity of the output device and/or the location of the output device based on the output data;
generating, by the mobile computing device, authentication data to authenticate the response data; and
outputting, by the mobile computing device, the response data and the authentication data for communication to a remote computer located remotely of the mobile computing device.

2. The method of claim 1, wherein the authentication data comprises a digital signature.

3. The method of claim 1, wherein the authentication data comprises a message authentication code.

4. The method of claim 3, wherein the authentication data comprises a hash-based message authentication code.

5. The method of claim 1, further comprising:
receiving, by the mobile computing device, from the output device a challenge in accordance with a challenge-response protocol; and
outputting, by the mobile computing device, a response to the challenge in accordance with the challenge-response protocol.

6. The method of claim 1, further comprising:
communicating the response data and the authentication data output by the mobile computing device to the remote computer.

7. The method of claim 6, wherein the communicating the response data and the authentication data output by the mobile computing device to the remote computer comprises:
communicating the response data and the authentication data to the output device; and
outputting, by the output device, the response data and the authentication data for communication to the remote computer.

8. The method of claim 6, further comprising:
receiving, by the remote computer, the response data and the authentication data;
evaluating, by the remote computer, the response data to determine the location of the output device and the identity of the mobile computing device; and
evaluating, by the remote computer, the authentication data to authenticate the response data.

9. The method of claim 8, wherein the response data defines an identity of the output device, and the evaluating, by the remote computer, the response data to determine the location of the output device comprises, evaluating, by the remote computer, the response data to determine the identity of the output device, and comparing the determined identity of the output device to an index stored in computer memory accessible by the remote computer in which an identity of the output device is associated with a location of the output device.

10. The method of claim 8, further comprising determining a location of the mobile computing device based on the determined location of the output device.

11. The method of claim 1, wherein the output device is communicatively coupled to the mobile computing device via a communication cable or a short-range wireless communication link.

12. The method of claim 11, further comprising outputting to the mobile computing device, by the output device, the location data via the communication cable or the short-range wireless communication link.

13. A mobile computing device, comprising:
an input module to receive, from an output device communicatively coupled to the input module, location data defining an identity of the output device and/or a location of the output device;
a response module to generate response data defining an identity of the mobile computing device and defining the identity of the output device and/or the location of the output device based on the location data;
an authentication module to generate authentication data to authenticate the response data; and
an output module to output the response data and the authentication data for communication to a remote computer located remotely of the mobile computing device.

14. An output device, comprising:
a memory having stored thereon location data defining an identity of the output device and/or a location of the output device;
a location module communicatively coupled to the memory;
a communication module communicatively coupled to the location module, the communication module comprising a communication link for communication with a computing device;
wherein the output device is to: [WJ3]
retrieve, by the location module, the location data from the memory; and
output, by the communication module, the location data for communication to the computing device.

15. The output device of claim 14, wherein the communication link comprises a communication cable or a short-range wireless communication link for communicatively coupling the location module with a computing device.
